# EUROPÄISCHE PATENTSCHRIFT

(11) **EP 0 845 844 B1**
(45) Veröffentlichungstag und Bekanntmachung des Hinweises auf die Patenterteilung: **02.05.2003**
(21) Anmeldenummer: 97250352.8
(22) Anmeldetag: 21.11.1997
(51) Int. Cl.: H02G 5/06

(54) **Gasisolierte Energieübertragungsanlage mit axial fixierten scheibenförmigen Stützisolatoren**
Gas-insulated busway with an axially fixed, disc-shaped supporting insulator
Bus de distribution d'énergie à isolement gazeuse avec un isolateur de support axialement fixe en forme de disque

(30) Priorität: 29.11.1996 DE 19650840; 11.06.1997 DE 19725311
(43) Veröffentlichungstag der Anmeldung: 03.06.1998
(73) Patentinhaber: SIEMENS AKTIENGESELLSCHAFT, 80333 München (DE)
(72) Erfinder: Kelch, Thomas, 13465 Berlin (DE); Kieper, Mario, 14612 Falkensee (DE); Bräunlich, Christoph, 12529 Schönefeld (DE)

(56) Entgegenhaltungen:
- EP-A- 0 281 323
- FR-A- 2 526 577
- US-A- 5 185 497
- PATENT ABSTRACTS OF JAPAN vol. 13, no. 459 (E-832), 17. Oktober 1989 & JP 01 177814 A (TOSHIBA CORP.), 14. Juli 1989
- PATENT ABSTRACTS OF JAPAN vol. 15, no. 110 (E-1046), 15. März 1991 & JP 03 003610 A (HITACHI LTD), 9. Januar 1991

## Beschreibung

Die Erfindung liegt auf dem Gebiet der Energieverteilung und ist bei der Montage von scheibenförmigen Stützisolatoren in gasisolierten Rohrleiteranlagen anzuwenden. Derartige Anlagen werden abschnittsweise vorgefertigt, die vorgefertigten Abschnitte zur Trasse transportiert und dann an oder in der Trasse durch Schweißen, mittels Steckverbindungen und mittels Flanschverbindungen miteinander verbunden (Siemens Prospekt: "Hochleistungsübertragung mit SF₆-Rohrleitern", Bestell-Nr. E 121/1448, 1975). - Die einzelnen vorgefertigten Abschnitte bestehen aus einem oder mehreren rohrförmigen Innenleitern und einem ebenfalls rohrförmigen Außenleiter. Der bzw. die Innenleiter werden mit Hilfe von isolierenden Abstandhaltern im Außenleiter gehalten, wozu u.a. scheibenförmige Stützisolatoren verwendet werden. Derartige Stützisolatoren können zusätzlich der Abschottung von Anlagenabschnitten dienen oder - durch eine entsprechende Formgebung - eine axiale Gasströmung ermöglichen. - Scheibenförmige Stützisolatoren, die nahe an einem Ende eines Außenleiterabschnittes angeordnet sind, werden häufig durch Verwendung von zwei Ringelektroden am Außenleiter fixiert.

Bei einer bekannten Energieübertragungsanlage dieser Art werden die scheibenförmigen Stützisolatoren im Außenleiter durch je zwei Ringelektroden fixiert, deren Innendurchmesser kleiner als der Innendurchmesser des Außenleiters ist und von denen die erste axial gegen das Ende eines Außenleiterabschnittes gesetzt und mit diesem Ende verschweißt ist und von denen die zweite unter Zwischenschaltung des Befestigungsflansches des Stützisolators mit der ersten Elektrode verschraubt ist. Die hierfür verwendeten Schrauben greifen in Sacklochgewinde in der ersten Ringelektrode ein. Auf dem Innenleiter sitzt der Stützisolator mittels einer Stützelektrode auf (DE 23 47 003 A1 / DE-Z "Elektrizitätswirtschaft, 1974, Seite 124 bis 128, Bild 1; US 3,931,451 A). Durch die Art der Befestigung des Stützisolators am Außenleiter werden sowohl bei der Montage des Stützisolators als auch beim Betrieb der Anlage erhebliche mechanische Spannungen in dem scheibenförmigen Stützisolator erzeugt.

Zur axialen Fixierung eines Lichtbogensperrisolators in einem Hochspannungsrohrleiter ist es weiterhin bekannt, daß sich der Isolator über mehrere Stege an dem Kapselungsrohr abstützt, wobei jeder Steg für sich an der Innenwand des Kapselungsrohres in einem gesonderten Feldsteuerungselement gelagert ist; das jeweilige Feldsteuerungselement weist eine den Fuß des jeweiligen Steges umgebende Wulst auf und kann zweiteilig ausgebildet sein. Zweckmäßig ist dabei das erste Teil mit dem Kapselungsrohr fest und das zweite Teil mit dem ersten Teil lösbar verbindbar (DE 295 12 172 U1).

Ausgehend von einer Energieübertragungsanlage mit den Merkmalen des Oberbegriffes des Patentanspruches 1 liegt der Erfindung die Aufgabe zugrunde, für die eine axiale Gasströmung ermöglichenden Stützisolatoren die axiale Fixierung so auszugestalten, daß die Stützisolatoren leicht montierbar sind und nach der Fixierung unter möglichst geringen mechanischen Spannungen stehen.

Zur Lösung dieser Aufgabe ist gemäß der Erfindung vorgesehen, daß der scheibenförmige Bereich einzelner Isolatoren einen Außendurchmesser aufweist, der kleiner als der Innendurchmesser der Elektroden ist, wobei der scheibenförmige Bereich am äußeren Umfang mit mehreren sich radial erstreckenden Stützfüßen versehen ist, und daß die zweite Elektrode solcher scheibenförmiger Isolatoren jeweils aus mehreren der Anzahl der Stützfüße entsprechenden Ringsegmenten besteht, die mit der ersten ringförmigen Elektrode verspannbar sind und jeweils eine Ausnehmung zum formschlüssigen Umfassen eines Stützfußes des Scheibenisolators aufweisen.

Bei einer derartigen Ausgestaltung der Energieübertragungsanlage im Bereich eines gasdurchlässigen, scheibenförmigen Stützisolators kann die ringförmige erste Elektrode schon im Zusammenhang mit der Herstellung des Außenleiters in diesen eingesetzt und dabei mit einfachen Mitteln genau positioniert und somit werksseitig sauber vormontiert werden. Der eben oder konisch geformte Scheibenisolator wird am Montageort für sich oder zusammen mit einem Innenleiterabschnitt in den Außenleiter eingesetzt, und gegebenenfalls zunächst provisorisch an der ersten Elektrode fixiert, beispielsweise mit Hilfe von Zentrierstiften, die an der ringförmigen ersten Elektrode angeordnet sind und in Ausnehmungen der Stützfüße eingreifen. Anschließend werden die einzelnen Ringsegmente der zweiten Elektrode an der ersten Elektrode befestigt; sie fixieren dabei den Scheibenisolator, indem sie dessen an der ersten Elektrode anliegende Stützfüße mit ihrer Ausnehmung formschlüssig, gegebenenfalls mit einem gewissen Spiel, umgreifen. Auf diese Weise ist eine spannungsfreie Montage des Scheibenisolators gewährleistet.

Die ringförmige erste Elektrode kann einen konstanten Querschnitt aufweisen. Dies ermöglicht es, diese Elektrode aus einer Aluminium-Knetlegierung zu fertigen. Da auch der rohrförmige Außenleiter üblicherweise aus einer solchen Legierung besteht, können beide Teile problemlos miteinander verschweißt werden, beispielsweise mit Hilfe von Kehlnähten im Bereichen zwischen den Stützfüßen des Scheibenisolators oder durch eine Lochschweißung von außen. - Die ringförmige erste Elektrode kann aber auch im Bereich zwischen den Stützfüßen des Scheibenisolators einen kleineren Querschnitt als im Bereich der Stützfüße aufweisen. Dadurch ist partiell ein größerer Abstand der ersten Elektrode vom Hochspannung führenden Innenleiter gegeben.

Die Verwendung von schalenartigen Ringsegmenten als zweite Elektrode ermöglicht die Herstellung dieser Ringsegmente als kostengünstige Gußteile, die keiner weiteren Bearbeitung bedürfen.

Die ringförmige erste Elektrode kann innerhalb des rohrförmigen Außenleiters mit Abstand zum Ende eines Außenleiterabschnittes angeordnet sein, wie es an sich bekannt ist. Zweckmäßiger ist es aber, sie am Ende eines Rohrabschnittes anzuordnen und sie als Teil eines Verbindungsflansches auszubilden. Verbindungsflansch und Elektrode können dabei einander so zugeordnet sein, daß am Übergang von der Elektrode auf den Flansch ein Zentrierbund für Vormontagezwecke gebildet wird.

Ausführungsbeispiele für die gemäß der Erfindung vorgesehene Fixierung des Scheibenisolators am Außenleiter sind in den Figuren 1 bis 14 dargestellt. Dabei zeigen die
- Figuren 1 und 2: den Scheibenisolator in Ansicht und Querschnitt, die
- Figuren 3 bis 8: die Anordnung und Fixierung des Scheibenisolators innerhalb des Außenleiters und die
- Figuren 9 und 10: ein Ringsegment der zweiten Elektrode. Die
- Figuren 11 und 12: zeigen eine zeite Ausführungsform für die erste ringförmige Elektrode. Weiterhin zeigen die
- Figuren 13 und 14: zwei Ausführungsformen für die Integration der ersten ringförmigen Elektrode in einen Verbindungsflansch.

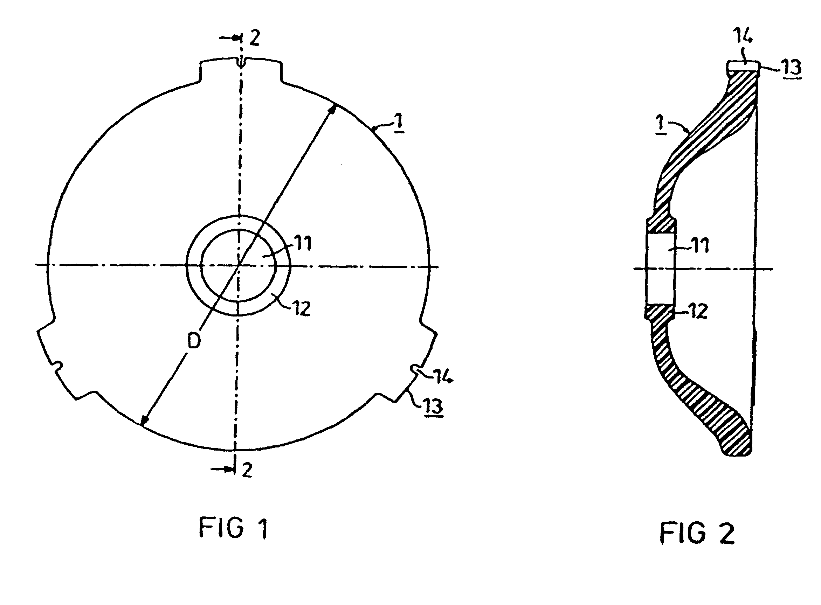

Gemäß den Figuren 1 und 2 ist der als Abstandhalter für einen Innenleiter verwendete Scheibenisolator 1 konisch ausgebildet und weist eine Mittelbohrung 11 mit einem Ringflansch 12 zur Aufnahme eines rohrförmigen Innenleiters auf und ist an seinem Umfang mit drei gleichmäßig verteilt angeordneten Stützfüßen 13 versehen. Der scheibenförmige Bereich des Isolators hat einen Außendurchmesser D, über den hinaus die Stützfüße 13 radial nach außen ragen. Die Stützfüße 13 sind mit einer axialen Ausnehmung 14 versehen, die für Zentrierzwecke vorgesehen ist.

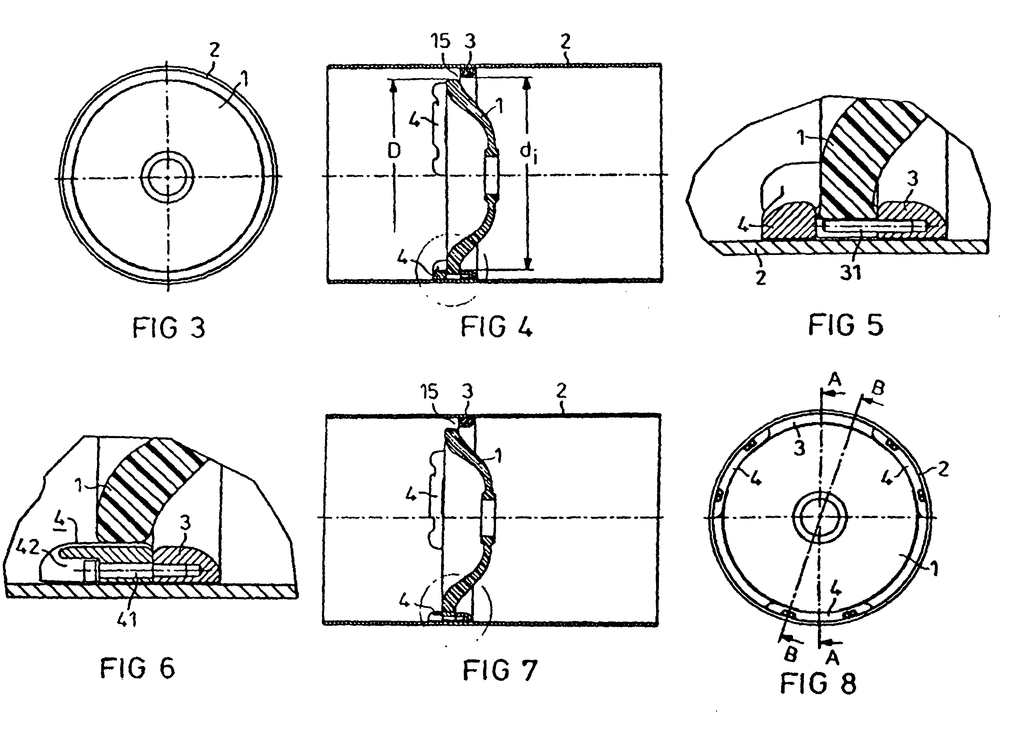

Gemäß den Figuren 4 und 7 ist der Scheibenisolator 1 unter Verwendung einer ersten ringförmigen Elektrode 3 und einer zweiten, aus Ringsegmenten 4 aufgebauten Elektrode in einem rohrförmigen Außenleiter 2 axial fixiert. Die ringförmige erste Elektrode 3 ist durch eine Schweißverbindung mit dem Außenleiter 2 fest verbunden, während die Segmente 4 der zweiten Elektrode mit der ringförmigen ersten Elektrode 3 axial verschraubt sind, wie insbesondere aus den Figuren 5 und 6 ersichtlich ist. Die Figuren 3 und 8 zeigen dabei jeweils eine Ansicht einmal von links und einmal von rechts auf den installierten Scheibenisolator. Dabei ist erkennbar, daß der Außendurchmesser D des Scheibenisolators geringfügig kleiner als der Innendurchmesser dᵢ der ringförmigen ersten Elektrode 3 ist, wodurch schlitzartige Durchlässe 15 zwischen dem Scheibenisolator 1 und der ersten ringförmigen Elektrode 3 gebildet sind.

Figur 5 zeigt ausschnittsweise einen Schnitt längs der Linie AA in Figur 8 im Bereich des unteren Stützfußes. Dabei ist ein Zentrierstift 31 dargestellt, der in die ringförmige Elektrode 3 eingelassen ist und der in die Ausnehmung 14 des Stützfußes 13 gemäß Figur 1 eingreift.

Gemäß Figur 6, die ausschnittsweise einen Schnitt längs der Linie BB in Figur 8 zeigt, ist ein Segment 4 der zweiten Elektrode mittels der Schrauben 41 mit der Ringelektrode 3 verspannt. Der Kopf der Schraube befindet sich dabei in einer Ausnehmung 42, wodurch eine abgeschirmte Anordnung der Schraube gewährleistet ist.

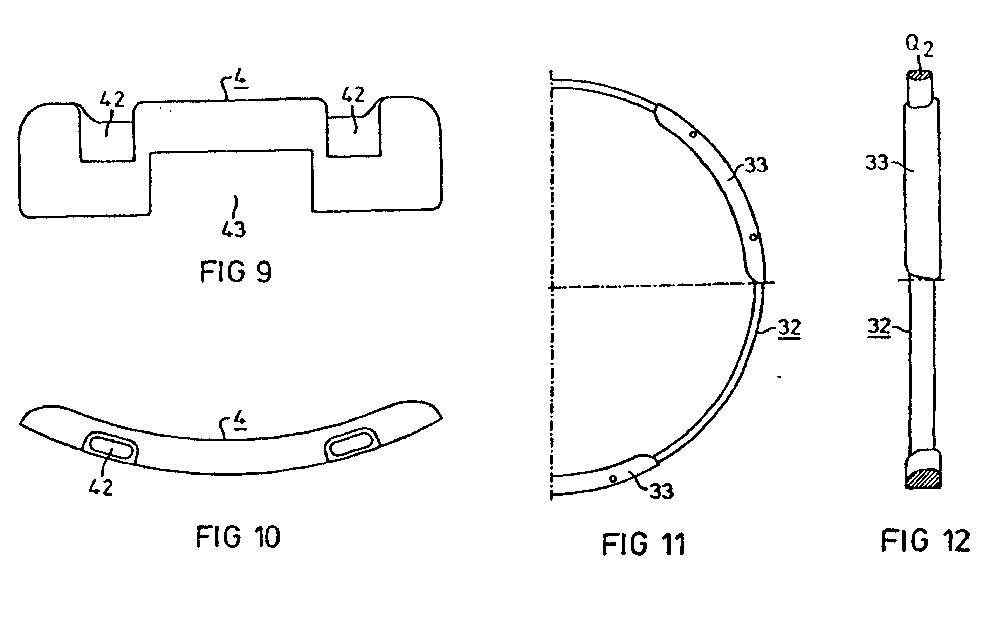

Gemäß den Figuren 9 und 10 ist jedes Segment 4 der zweiten Elektrode mit einer taschenartigen Ausnehmung 43 versehen, die bei der Verbindung des Segmentes mit der Ringelektrode 3 den jeweiligen Stützfuß formschlüssig umfaßt. - Figur 9 zeigt dabei das Ringsegment mit Blick auf die am Außenleiter 2 anliegende Fläche. - Anstelle einer taschenartigen Ausnehmung kommt auch eine umfänglich geschlossene, lochartige, dem Querschnitt des Stützfußes angepaßte Ausnehmung in Betracht.

Gemäß den Figuren 11 und 12 kann die erste Ringelektrode 32 außerhalb der für die Fixierung der Stützfüße vorgesehenen Bereiche 33 einen kleineren Querschnitt Q₂ aufweisen als in den Bereichen 33.

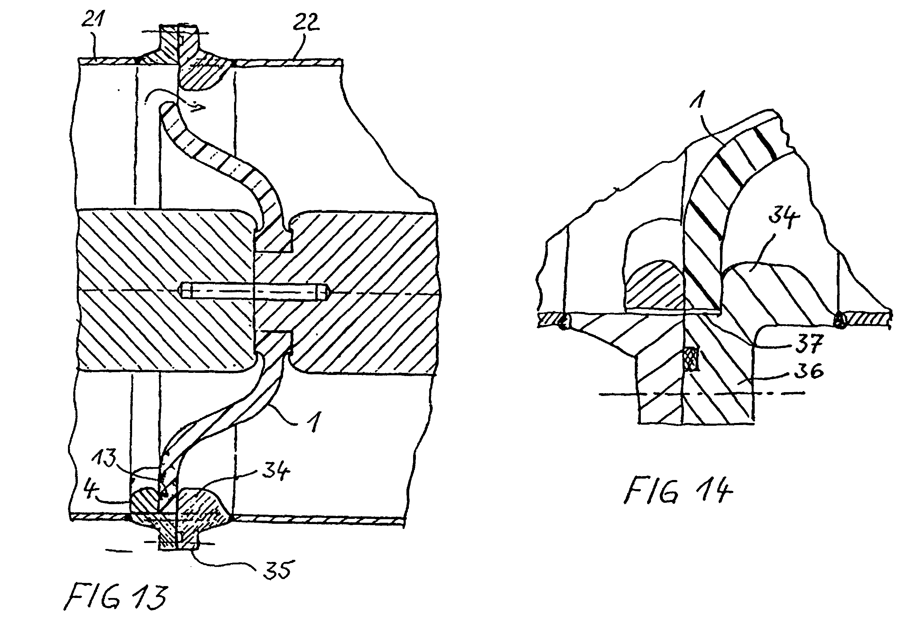

Gemäß Figur 13 ist im Bereich einer Flanschverbindung zwischen zwei Rohrabschnitten 21,22 eines Außenleiters der eine Verbindungsflansch 35 zugleich als ringförmige Elektrode 34 ausgebildet, an der der Scheibenisolator 1 mit seinen Stützfüßen 13 anliegt. Ringsegmente 4 der zweiten Elektrode sind in gleicher Weise wie gemäß den Figuren 4 bis 10 ausgebildet und angeordnet.

Gemäß Figur 14 ist der Verbindungsflansch 36 am Übergang von der ringförmigen Elektrode 34 auf das eigentliche Flanschteil noch mit einem Zentrierbund 37 versehen, der zur radialen Fixierung des Isolators 1 für Vormontagezwecke dienen kann.

## Patentansprüche

1. Gasisolierte Energieübertragungsanlage, bei der der rohrförmige Innenleiter mittels isolierender Abstandhalter im rohrförmigen Außenleiter (2) abgestützt ist und bei der in größeren Abständen zur Bildung von Festpunkten für den Innenleiter als Abstandhalter scheibenförmige Isolatoren (1) verwendet sind, die einerseits am Innenleiter und andererseits jeweils mittels einer ersten ringförmigen Elektrode (3) und einer zweiten Elektrode am Außenleiter (2) axial fixiert sind, wobei die erste Elektrode mit dem Außenleiter (2) verschweißt ist und die zweite Elektrode (4) mit der ersten Elektrode (3) lösbar verbunden ist und wobei der Innendurchmesser (di) sowohl der ersten (3) als auch der zweiten Elektrode (4) kleiner als der Innendurchmesser des Außenleiters (2) ist,
**dadurch gekennzeichnet,**
**daß** der scheibenförmige Bereich einzelner Isolatoren (1) einen Außendurchmesser (D) aufweist, der kleiner als der Innendurchmesser (dᵢ) der Elektroden (3,4) ist, wobei der scheibenförmige Bereich am äußeren Umfang mit mehreren sich radial erstreckenden Stützfüßen (13) versehen ist,
und **daß** die zweite Elektrode solcher scheibenförmiger Isolatoren (1) jeweils aus mehreren der Anzahl der Stützfüße (13) entsprechenden Ringsegmenten (4) besteht, die mit der ersten ringförmigen Elektrode (3) verspannbar sind und jeweils eine Ausnehmung (43) zum formschlüssigen Umfassen eines Stützfußes (13) des scheibenförmigen Isolators (1) aufweisen.

2. Energieübertragungsanlage nach Anspruch 1,
**dadurch gekennzeichnet,**
**daß** die Stützfüße (13) mit Ausnehmungen (14) versehen sind, in die Zentrierstifte (31) eingreifen, welche an der ersten Elektrode (3) angeordnet sind.

3. Energieübertragungsanlage nach Anspruch 1 oder 2,
**dadurch gekennzeichnet,**
**daß** die ringförmige erste Elektrode (32) in den Bereichen zwischen den Stützfüßen (13) einen kleineren Querschnitt (Q₂) als im Bereich (33) der Stützfüße aufweist.

4. Energieübertragungsanlage nach einem der Ansprüche 1 bis 3,
**dadurch gekennzeichnet,**
**daß** die ringförmige erste Elektrode (3) innerhalb des rohrförmigen Außenleiters (2) mit Abstand zum Ende eines Außenleitersabschnittes angeordnet ist.

5. Energieübertragungsanlage nach Anspruch 1 oder 2,
**dadurch gekennzeichnet,**
**daß** die ringförmige erste Elektrode (34) einen Teil eines Verbindungsflansches (35) bildet, der am Ende eines Rohrabschnittes (21) des Außenleiters an diesen angeschweißt oder angegossen ist.

## Claims

1. Gas-insulated power transmission system, in which the tubular inner conductor is supported by means of isolating spacers in the tubular outer conductor (2), and in which insulators (1) in the form of discs are used at relatively long distances as spacers to form fixing points for the inner conductor and are fixed axially on the one hand to the inner conductor and on the other hand to the outer conductor (2), in each case by means of a first annular electrode (3) and a second electrode, with the first electrode being welded to the outer conductor (2) and the second electrode (4) being detachably connected to the first electrode (3), and with the internal diameter (di) of both the first electrode (3) and of the second electrode (4) being smaller than the internal diameter of the outer conductor (2),
**characterized**
**in that** the area of individual insulators (1) which is in the form of a disc has an external diameter (D) which is smaller than the internal diameter (dᵢ) of the electrodes (3, 4), with the area which is in the form of a disc being provided on the outer circumference with a number of radially extending supporting feet (13),
and **in that** the second electrode of such insulators (1) which are in the form of discs in each case comprises a number of ringed segments (4), corresponding to the number of supporting feet (13), which can be braced by means of the first annular electrode (3) and each have a recess (43) in order to surround one supporting foot (13) of the insulator (1) which is in the form of a disc, in an interlocking manner.

2. Power transmission system according to Claim 1,
**characterized**
**in that** the supporting feet (13) are provided with recesses (14) in which centring pins (31) engage, which are arranged on the first electrode (3).

3. Power transmission system according to Claim 1 or 2,
**characterized**
**in that** the annular first electrode (32) has a smaller cross section (Q₂) in the areas between the supporting feet (13) than in the area (33) of the supporting feet.

4. Power transmission system according to one of Claims 1 to 3,
**characterized**
**in that** the annular first electrode (3) is arranged within the tubular outer conductor (2), at a distance from the end of an outer conductor section.

5. Power transmission system according to Claim 1 or 2,
**characterized**
**in that** the annular first electrode (34) forms a part of a connecting flange (35) which is welded to or cast onto the outer conductor at the end of a tubular section (21) of the outer conductor.

## Revendications

1. Système isolé par du gaz de transmission d'énergie, dans lequel le conducteur intérieur tubulaire s'appuie au moyen d'un intercalaire isolant dans le conducteur (2) extérieur tubulaire et dans lequel il est utilisé des isolateurs (1) en forme de disque comme intercalaires à des distances assez grandes pour former des points fixes pour le conducteur intérieur, isolateurs qui sont immobilisés axialement d'une part sur le conducteur intérieur et d'autre part respectivement au moyen d'une première électrode (3) annulaire et d'une deuxième électrode sur le conducteur (2) extérieur, la première électrode étant soudée au conducteur (2) extérieur et la deuxième électrode (4) étant reliée de manière amovible à la première électrode (3), le diamètre intérieur (dᵢ) tant de la première électrode (3) que de la deuxième électrode (4) étant inférieur au diamètre intérieur du conducteur (2) extérieur,
**caractérisé**
**en ce que** la partie en forme de disque des isolateurs (1) individuels a un diamètre (D) extérieur qui est plus petit que le diamètre (dᵢ) intérieur des électrodes (3, 4), la partie en forme de disque étant munie sur le pourtour extérieur de plusieurs pieds (13) d'appui s'étendant radialement
et **en ce que** la deuxième électrode de ces isolateurs (1) en forme de disque est constituée respectivement de plusieurs segments (4) annulaires correspondant au nombre des pieds (13) d'appui, pouvant être bloqués avec la première électrode (3) annulaire et ayant respectivement un évidement (43) de réception à complémentarité de forme d'un pied (13) d'appui de l'isolateur (1) en forme de disque.

2. Système de transmission d'énergie suivant la revendication 1,
**caractérisé en ce que** les pieds (13) d'appui sont munis d'évidements (14) dans lesquels pénètrent des broches (31) de centrage qui sont montées sur la première électrode (3).

3. Système de transmission d'énergie suivant la revendication 1 ou 2,
**caractérisé en ce que** la première électrode (32) annulaire a, dans les parties comprises entre les pieds (13) d'appui une section (Q₂) transversale plus petite que dans la partie (33) des pieds d'appui.

4. Système de transmission d'énergie suivant l'une des revendications 1 à 3,
**caractérisé en ce que** la première électrode (3) annulaire est disposée à l'intérieur du conducteur (2) extérieur tubulaire à distance de l'extrémité d'un tronçon du conducteur extérieur.

5. Système de transmission d'énergie suivant la revendication 1 ou 2,
**caractérisé en ce que** la première électrode (34) annulaire forme une partie d'une bride (35) d'assemblage qui est soudée ou coulée au conducteur extérieur à l'extrémité d'un tronçon (21) tubulaire de celui-ci.
